Europäisches Patentamt

European Patent Office

Office européen des brevets

(11) Numéro de publication: **0 322 275 B1**

# FASCICULE DE BREVET EUROPEEN

(45) Date de publication de fascicule du brevet: **05.08.92**  (51) Int. Cl.5: **B60G 17/08**

(21) Numéro de dépôt: **88403158.4**

(22) Date de dépôt: **13.12.88**

(54) **Suspension à amortissement variable.**

(30) Priorité: **22.12.87 FR 8718497**

(43) Date de publication de la demande:
**28.06.89 Bulletin 89/26**

(45) Mention de la délivrance du brevet:
**05.08.92 Bulletin 92/32**

(84) Etats contractants désignés:
**DE GB IT**

(56) Documents cités:
EP-A- 0 218 120     DE-A- 2 360 149
DE-A- 3 323 026     FR-A- 1 094 986
GB-A- 2 028 513     GB-A- 2 161 894

PATENT ABSTRACTS OF JAPAN, vol. 6, no.
246 (M-176)[1124], 4 décembre 1982, page
110 M 176; & JP-A-57 144 112 (HONDA GIKEN
KOGYO K.K.) 06-09-1982

(73) Titulaire: **AUTOMOBILES PEUGEOT**
**75, avenue de la Grande Armée**
**F-75116 Paris(FR)**

Titulaire: **AUTOMOBILES CITROEN**
**62 Boulevard Victor-Hugo**
**F-92200 Neuilly-sur-Seine(FR)**

(72) Inventeur: **Galtier, Lucien**
**28, rue de Favigny**
**F-91390 Morsang sur Orge(FR)**
Inventeur: **Barthelemy, André**
**52, route de Limours**
**F-78470 St. Rémy-les-Chevreuse(FR)**
Inventeur: **Herbreteau, Roger**
**4, Ouai de Stalingrad**
**F-92100 Boulogne sur Seine(FR)**

(74) Mandataire: **Boivin, Claude**
**9, rue Edouard-Charton**
**F-78000 Versailles(FR)**

## Description

La présente invention concerne des suspensions à amortissement variable.

Le document EP-A- 0 218 120 décrit une suspension à amortissement variable comportant notamment un système d'amortissement variable en fonction de paramètres tels que la vitesse, la hauteur et l'angle de braquage des roues, une barre anti-devers reliant les bras de suspension et des moyens de détection de la hauteur de l'essieu avant et des moyens électroniques transmettant à des actionneurs une information quand le signal correspondant à la hauteur de l'essieu avant dépasse un seuil prédéterminé.

Par ailleurs, les documents JP-A- 57 144 112, FR-A- 1 094 986 et DE-A- 2 360 149 décrivent des suspensions qui comprennent un dispositif de détection comportant un boîtier monté sur la caisse du véhicule, susceptible de fournir un signal électrique correspondant à l'angle de rotation du centre de la barre anti-devers et muni d'un levier susceptible d'être entraîné en rotation par des moyens le reliant à un levier lié rigidement à la barre anti-devers en son point milieu.

Sur un véhicule équipé d'une suspension à amortissement variable, il est nécessaire de détecter avec précision les mouvements de pompage pour améliorer le confort et la tenue de route en roulage en ligne droite avec de grandes ondulations, bosses ou creux isolés.

Les moyens de détection ne doivent prendre en compte ni les mouvements de roulis de la caisse ni les débattements de chaque roue prise isolément.

A cette fin, la suspension selon l'invention comporte les caractéristiques définies dans la partie caractérisante de la revendication 1.

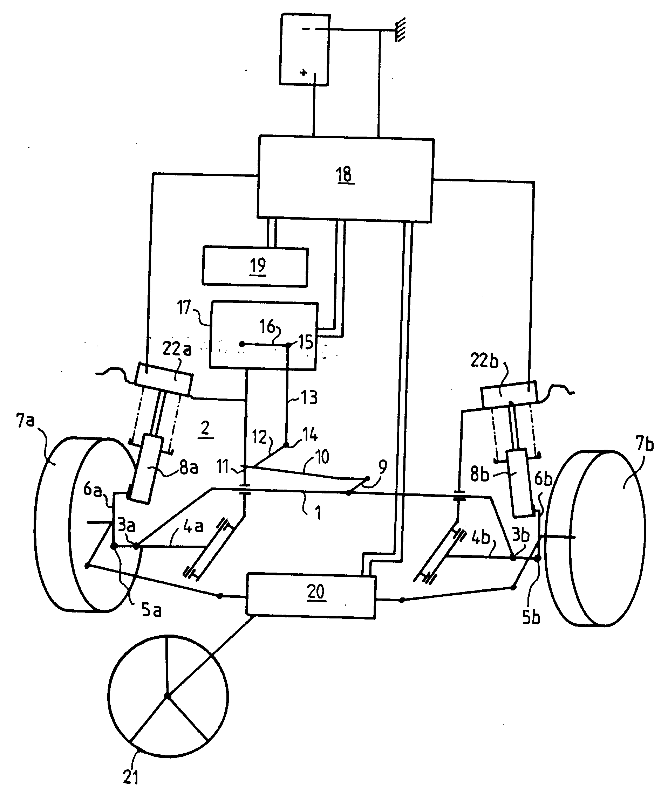

On a décrit ci-après, à titre d'exemple non limitatif, un mode de réalisation d'une suspension selon l'invention, avec référence à la Figure Unique du dessin annexé qui est un schéma de cette suspension.

Au dessin, on voit une barre anti-devers 1 qui est montée pivotante par rapport à la caisse 2 du véhicule et dont les extrémités coudées sont articulées en 3a et 3b à des bras 4a et 4b; chacun de ces derniers est monté pivotant par rapport à la caisse 2 autour d'un axe longitudinal et est relié par une rotule 5a ou 5b à un porte-fusée 6a ou 6b pour une roue 7a ou 7b. Les porte-fusées 6a et 6b sont reliés à la caisse 2 par des éléments de suspension 8a et 8b.

Un levier 9 pince en son milieu la barre anti-devers 1, c'est-a-dire dans l'axe de la caisse. Ce levier est fixé sur l'une des extrémités d'une tige 10 rigide en torsion et ayant son autre extrémité montée dans un palier 11 fixé sur la caisse 2. La tige 10 porte au voisinage du palier 11 un levier 12 qui est relié par l'intermédiaire d'une biellette 13 et de rotules 14 et 15 à un levier 16 commandant un détecteur 17 dont le boîtier est fixé sur l'un des côtés de la caisse 2.

Le détecteur 17 détecte la valeur moyenne algébrique des débattements des roues avant, c'est-à-dire le pompage de la caisse 2. Il est par contre insensible au mouvement de roulis.

Ce détecteur 17 fournit un signal à un calculateur électronique 18 qui reçoit par ailleurs un signal provenant d'un détecteur de vitesse 19 et un signal provenant d'un détecteur 20 de l'angle et de la vitesse de pivotement du volant 21. Le calculateur 18 fournit des signaux commandant des actionneurs 22a et 22b de type connu permettant de modifier l'amortissement des éléments de suspension 8a et 8b.

Lorsque la valeur moyenne des débattements des deux roues 7a et 7b dépasse un certain seuil, fonction de la vitesse du véhicule ainsi que de l'angle et de la vitesse de pivotement du volant 21, le calculateur 18 fournit aux actionneurs 22a et 22b des signaux rendant plus ou moins fermes les suspensions 8a et 8b. Il va de soi que la présente invention ne doit pas être limitée au mode de réalisation décrit et représenté, mais en couvre, au contraire, toutes les variantes. C'est ainsi que la biellette 10 pourrait être supprimée, le détecteur 17 étant placé au voisinage immédiat du plan médian longitudinal du véhicule; mais le détecteur se trouve alors dans un espace déjà occupé par d'autres organes tels que le moteur et la boîte de vitesses.

## Revendications

1. Suspension pour véhicule automobile comportant notamment un système d'amortissement variable en fonction de paramètres tels que la vitesse, la hauteur et l'angle de braquage des roues, une barre anti-devers (1) reliant les bras de suspension (4a et 4b) et des moyens de détection de la hauteur de l'essieu avant comprenant un dispositif (17) susceptible de fournir un signal électrique correspondant à l'angle de rotation du centre de la barre anti-devers (1), et des moyens électroniques (18) transmettant à des actionneurs (22a et 22b) une information quand le signal susdit dépasse un seuil prédéterminé,
caractérisé en ce que le dispositif de détection (17) comporte un boîtier fixé sur un côté de la caisse (2) et muni d'un levier (16) susceptible d'être entraîné en rotation par des moyens le reliant à un levier (3) lié rigidement à la barre anti-devers (1) en son point milieu, et en ce que les moyens reliant le levier (16) du boîtier de détection au levier (9) lié à la barre anti-devers (1) comprennent :

- une tige (10), relativement rigide en torsion, ancrée par l'une de ses extrémités au levier (9) de la barre anti-devers et montée par son autre extrémité sur la caisse par l'intermédiaire d'un palier (11), et
- un levier (12) lié rigidement à cette tige (10) à proximité de son palier (11) et relié au levier (16) du boîtier de détection par l'intermédiaire d'une biellette (13).

2. Suspension selon la revendication 1, caractérisée en ce que la biellette (13) est reliée par des rotules (13 et 14) respectivement à l'extrémité du levier (16) du boîtier de détection et à celle du levier (12) de la tige (10).

## Claims

1. Suspension for a motor vehicle and comprising a variable damping system according to certain parameters, such as the speed, height and the steering lock angle of the wheels, one antisway bar (1) connecting the suspension arms (4a and 4b) and means for detecting the height of the front axle including a device (17) able to provide an electric signal corresponding to the angle of rotation of the center of the antisway bar (1), and electronic means (18) transmitting information to actuators (22a and 22b) when said signal exceeds a predetermined threshold, wherein the detection device comprises a box secured to one side of the body (2) and fitted with a lever (16) able to be rotary-driven by means connecting it to a lever (9) rigidly linked to the antisway bar (1) at its middle point, and wherein the means connecting the lever (16) of the detection box to the lever (9) linked to the antisway bar (1) include :

- a relatively torsion rigid rod (10) anchored by one of its extremities to the lever (9) of the antisway bar and mounted via its other extremity to the body by means of a bearing (11), and
- a lever (12) rigidly linked to this rod (10) close to its bearing (11) and connected to the lever (16) of the detection box by means of a rocker bar (13).

2. Suspension according to claim 1, wherein the rocker bar (13) is connected by joints respectively (13 and 14) to the extremity of the lever (16) of the detection box and to that of the lever (12) of the rod (10).

## Patentansprüche

1. Aufhängung für Automobile, die insbesondere eine variable Dämpfung aufgrund von Parametern wie Geschwindigkeit, Höhe und Ausschlagwinkel der Räder besitzt, wobei eine Stabilisatorstange (1) den Querlenker (4a, 4b) mit Detektoren für die Vorderachshöhe verbindet, die über eine Vorrichtung (17) verfügen, durch die ein elektrisches Signal entsprechend dem Drehwinkel des Mittelpunktes der Stabilisatorstange (1) erzeugt wird, sowie über elektronische Mittel (18), durch die eine Information an Betätigungselemente (22a, 22b) übertragen wird, sobald das o.a. Signal eine vorgegebene Schwelle überschreitet, dadurch gekennzeichnet, daß die Detektionsvorrichtung (17) ein auf einer Seite des Wagenkastens (2) befestigtes Gerät besitzt und mit einem Hebel (16) ausgerüstet ist, welcher durch Mittel in Drehung versetzt wird, über die er mit einem in seinem Mittelpunkt starr mit der Stabilisatorstange (1) verbundenen Hebel (9) verbunden ist, sowie dadurch, daß die Mittel, die den Hebel (16) des Detektionsgerätes mit dem mit der Stabilisatorstange (1) verbundenen Hebel (9) verbinden,

- einen relativ starren Torsionsstab (10), der an einem Ende mit dem Hebel (9) der Stabilisatorstange (1) und mit dem anderen Ende über ein Lager (11) an dem Wagenkasten befestigt ist,
- einen in der Nähe des Lagers (11) starr mit diesem Stab (10) verbundenen und über einen Schwingarm (13) mit dem Hebel des Detektorengerätes verbundenen Hebel (12)

besitzen.

2. Aufhängung nach Patentanspruch 1, dadurch gekennzeichnet, daß der Schwingarm (13) über Lagerzapfen (13, 14) mit dem Ende des Hebels (16) des Detektorgerätes und dem Ende des Hebels (12) des Stabes (10) verbunden ist.